# EUROPEAN PATENT APPLICATION

(11) **EP 4 801 136 A1**
(43) Date of publication of application: **02.09.2026**
(21) Application number: 25160822.0
(22) Date of filing: 28.02.2025
(51) Int. Cl.: H04W 68/00, H04W 52/02, H04W 68/02

(54) **PAGING MONITORING FOR LOW POWER OPERATION**

(71) Applicant: Nokia Technologies Oy, 02610 Espoo (FI)
(72) Inventor: DALSGAARD, Lars, Oulu (FI); KAINULAINEN, Jani-Pekka, Cottenham (GB); KAIKKONEN, Jorma Johannes, Oulu (FI); KNUDSEN, Knud, Aabybro (DK); VENKATRAMAN, Ganesh, Oulu (FI)
(74) Representative: Nokia EPO representatives

(57) **Abstract**

Example embodiments of the present disclosure are directed to paging monitoring for low power operation. A method comprises a user device receives, from a network device, information that the lower power signal is supported; responsive to receiving the information, the user device enables skipping of at least one paging occasion; and the user device monitors, based on the skipping of the at least one paging, a first number of consecutive paging occasions among a greater second number of consecutive paging occasions.

## Description

### FIELD

Various example embodiments of the present disclosure generally relate to the field of telecommunication and in particular, to devices, methods, apparatuses and computer readable storage medium for paging monitoring for low power operation.

### BACKGROUND

Enhancing energy efficiency of a user device is an important consideration in the fifth generation (5G) mobile networks and the emerging sixth generation (6G) mobile network. For battery-limited Internet of Things (IoT) applications, where downlink monitoring may consume large amount of energy, efficient power-saving mechanisms may be required while considering performance tradeoffs. In this regard, a low-power wake-up receiver (LP-WUR or LR) and wake-up signal (WUS) may serve as a solution to reduce energy consumption by allowing the user device to remain in a low-power state and wake-up when necessary, without compromising downlink latency.

### SUMMARY

In a first aspect of the present disclosure, there is provided a user device. The user device comprises at least one processor; and at least one memory storing instructions that, when executed by the at least one processor, cause the user device incapable of reception of a lower power signal at least to: receive, from a network device, information that the lower power signal is supported; responsive to receiving the information, enable skipping of at least one paging occasion; and monitor, based on the skipping of the at least one paging, a first number of consecutive paging occasions among a greater second number of consecutive paging occasions.

In a second aspect of the present disclosure, there is provided a network device. The network device comprises at least one processor; and at least one memory storing instructions that, when executed by the at least one processor, cause the network device at least to: transmit, to a user device, information that a lower power signal is supported; and repeat transmission of a paging message to the user device over at least a third number of consecutive paging occasions among a second number of consecutive paging occasions, the third number being less than or equal to the second number.

In a third aspect of the present disclosure, there is provided a method. The method comprises: receiving, from a network device, information that the lower power signal is supported; responding to receiving the information, enabling skipping of at least one paging occasion; and monitoring, based on the skipping of the at least one paging, a first number of consecutive paging occasions among a greater second number of consecutive paging occasions.

In a fourth aspect of the present disclosure, there is provided a method. The method comprises: transmitting, to a user device, information that a lower power signal is supported; and repeating transmission of a paging message to the user device over at least a third number of consecutive paging occasions among a second number of consecutive paging occasions, the third number being less than or equal to the second number.

In a fifth aspect of the present disclosure, there is provided a user device. The user device comprises means for receiving, from a network device, information that the lower power signal is supported; means for responding to receiving the information, enable skipping of at least one paging occasion; and means for monitoring, based on the skipping of the at least one paging, a first number of consecutive paging occasions among a greater second number of consecutive paging occasions.

In a sixth aspect of the present disclosure, there is provided a network device. The network device comprises means for transmitting, to a user device, information that a lower power signal is supported; and means for repeating transmission of a paging message to the user device over at least a third number of consecutive paging occasions among a second number of consecutive paging occasions, the third number being less than or equal to the second number.

In a seventh aspect of the present disclosure, there is provided a computer readable medium. The computer readable medium comprises instructions stored thereon for causing an apparatus to perform at least the method according to the third and fourth aspects.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2A and 2B illustrate example receiver states in a user device in accordance with some example embodiments of the present disclosure;
FIG. 3A illustrates an example signaling flow for a process of paging monitoring in accordance with some other example embodiments of the present disclosure;
FIG. 3B illustrates another example signaling flow for a process of paging monitoring in accordance with some other example embodiments of the present disclosure;
FIG. 4A illustrates another example signaling flow for paging monitoring in accordance with some example embodiments of the present disclosure;
FIG. 4B illustrates another example signaling flow for paging monitoring in accordance with some example embodiments of the present disclosure;
FIG. 5 illustrates a flowchart of a method implemented at a user device in accordance with some example embodiments of the present disclosure;
FIG. 6 illustrates a flowchart of a method implemented at a network device in accordance with some example embodiments of the present disclosure;
FIG. 7 illustrates a flowchart of another method implemented at a user device in accordance with some example embodiments of the present disclosure;
FIG. 8 illustrates a flowchart of another method implemented at a network device in accordance with some example embodiments of the present disclosure;
FIG. 9 illustrates a simplified block diagram of a device that is suitable for implementing example embodiments of the present disclosure; and
FIG. 10 illustrates a block diagram of an example computer readable medium in accordance with some example embodiments of the present disclosure.

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a user device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5G-advanced, the sixth generation (6G) communication protocols, wireless local network communication protocols such as Institute for Electrical and Electronics Engineers (IEEE) 802.11 and the like, and/or any other protocols either currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a user device accesses the network and receives services therefrom. The network device may refer to a base station (BS) or an access point (AP), for example, a node B (NodeB or NB), an evolved NodeB (eNodeB or eNB), an NR NB (also referred to as a gNB), a remote radio unit (RRU), a radio head (RH), a remote radio head (RRH), a relay, an integrated access and backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a centralized unit (CU) and a distributed unit (DU) at an IAB donor node. An IAB node comprises a mobile terminal (IAB-MT) part that behaves like a UE toward the parent node, and a DU part of an IAB node behaves like a base station toward the next-hop IAB node.

The term "user device" refers to any end device that may be capable of wireless communication. By way of example rather than limitation, a user device may also be referred to as user equipment (UE), a subscriber station (SS), a portable subscriber station, a mobile station (MS), or an access terminal (AT). The user device may include, but not limited to, a mobile phone, a cellular phone, a smart phone, voice over IP (VoIP) phones, wireless local loop phones, a tablet, a wearable user device, a personal digital assistant (PDA), portable computers, desktop computer, image capture user devices such as digital cameras, gaming user devices, music storage and playback appliances, vehicle-mounted wireless user devices, wireless endpoints, mobile stations, laptop-embedded equipment (LEE), laptop-mounted equipment (LME), universal serial bus (USB) dongles, smart devices, wireless customer-premises equipment (CPE), an internet of things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The user device may also correspond to a mobile termination (MT) part of an IAB node (e.g., a relay node). In the following description, the terms "user device", "terminal device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a user device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

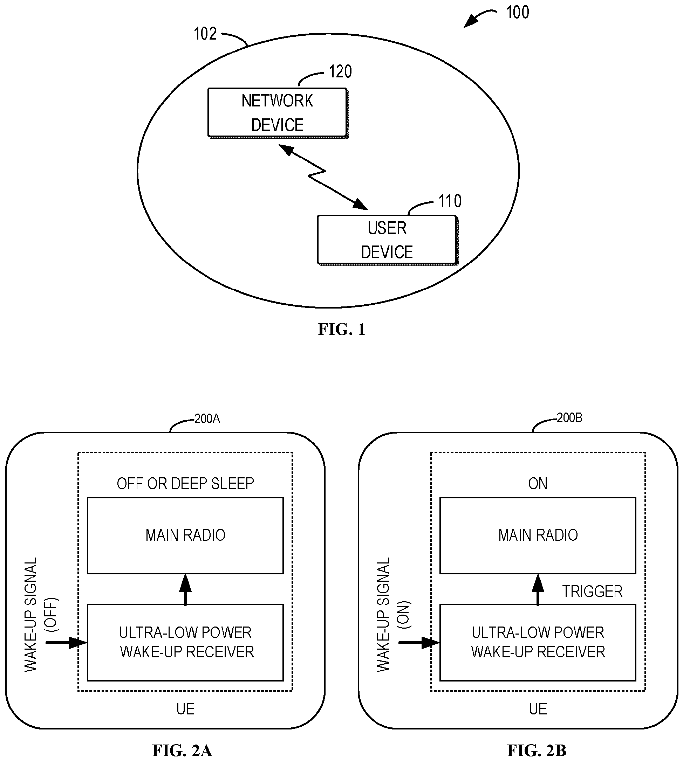

FIG. 1 illustrates an example communication environment 100 in which example embodiments of the present disclosure can be implemented. As shown in FIG. 1, the communication environment 100 may comprise a user device 110, which may operate as a UE. The communication environment 100 may further comprise a network device 120, which may operate as a BS or a gNB.

A serving area provided by the network device 120 is called a cell 102. The user device 110 may communicate with the network device 120 within the cell 102. The cell 102 currently serving the user device 110 may be considered as a serving cell.

In some example embodiments, a link from the network device 120 to the user device 110 is referred to as a downlink (DL), while a link from the user device 110 to network device 120 is referred to as an uplink (UL). In DL, the network device 120 is a transmitting (TX) apparatus (or a transmitter) and the user device 110 is a receiving (RX) apparatus (or a receiver). In UL, the user device 110 is a TX apparatus and the network device 120 is a RX apparatus.

It is to be understood that the number or type of devices and their connections shown in FIG. 1 are only for the purpose of illustration without suggesting any limitation. The communication environment 100 may include any suitable number or type of devices configured to implement some example embodiments.

To achieve improved power saving operation in different modes of the user device 110, various aspects may be considered. A low power wake-up signal (LP-WUS) design may be applicable to both IDLE/INACTIVE and CONNECTED modes. The LP-WUS may be based on on-off keying (OOK), for example, OOK-1 (OOK-1 may use a single symbol duration for each transmission) and/or OOK-4 (OOK-4 may use four durations for each transmission), with overlaid OFDM sequences over an OOK symbol. For an IDLE/INACTIVE operation, it may be beneficial to ensure that the same information is delivered irrespective of the type of LP-WURs, and an OFDM sequence may carry the information. At least duty-cycled monitoring of LP-WUSs may be supported.

For the IDLE/INACTIVE modes, specifying a procedure and configuration of LP-WUS may be beneficial to enable paging monitoring triggered by LP-WUS, including aspects such as configuration, sub-grouping, and entry/exit conditions for LP-WUS monitoring. Additionally, a low-power synchronization signal (LP-SS) may be specified with a periodicity of Y milliseconds for LP-WUR to facilitate synchronization and/or radio resource management (RRM) for the serving cell. The LP-SS may be based on OOK-1 and/or OOK-4 waveforms, with or without overlaid OFDM sequences. If an LP-WUR can receive a primary synchronization signal (PSS) and secondary synchronization signal (SSS), these signals may be used for synchronization and RRM instead of LP-SS. The specific value of Y may be determined, with an initial reference point of 320 milliseconds. Further relaxation of RRM requirements for UE measurement reporting may also be considered for both serving and neighboring cell measurements, with UE serving cell RRM measurement potentially being offloaded from a main receiver or main radio (MR) to LP-WUR under certain conditions.

For the CONNECTED mode, specifying procedures to allow UE MR physical downlink control channel (PDCCH) monitoring triggered by LP-WUS may be beneficial, including aspects such as activation and deactivation procedures for LP-WUS monitoring. However, in the CONNECTED mode, UE MR ultra-deep sleep may not be considered, and RRM, radio link monitoring (RLM), beam failure detection (BFD), and channel state information (CSI) measurements may still be performed by the MR. The target coverage of LP-WUS and LP-SS may align with the coverage of the physical uplink shared channel (PUSCH) for message 3. Furthermore, the optimization of LP-WUS signal design for IDLE/INACTIVE mode may take priority over optimization for CONNECTED mode.

Hence, it may be beneficial to enable the use of a separate LP-WUR at the UE instead of the main receiver to reduce power consumption of the UE. The main receiver of the UE may remain in a sleep mode or be powered off for power saving and may be activated only upon reception of a wake-up signal (WUS) from the network.

The network may trigger the UE to wake-up in an event-driven manner by transmitting a WUS to the UE, which may be monitored by the dedicated LP-WUR. Upon receiving the WUS, the LP-WUR may trigger the activation of the NR transceiver (i.e., main receiver), allowing communication to start. Thus, the LP-WUR may wake-up the main radio which contains the MR, while the main radio may otherwise remain powered off or in a deep sleep mode.

FIG. 2A and 2B illustrate example receiver states of a UE with a LP-WUR. As shown in a state 200A of FIG. 2A, a wake-up signal (e.g., a LP-WUS) is off, causing a main radio to remain in an OFF or a deep sleep state. In a state 200B of FIG. 2B, when the wake-up signal is received, an ultra-low power wake-up receiver (e.g., a LP-WUR) triggers an activation of the main radio, allowing a communication to proceed.

The LP-WUR may operate in an always-on manner with very low power consumption. It may consume less power compared to an NR transceiver by using a simplified WUS signal design and dedicated hardware for its monitoring, which may be configured to receive only WUSs. In some implementations, the LP-WUR may be considered a power-efficient state of the main receiver, with limited capabilities and processing capability activated. This configuration allows the UE to maintain an energy-efficient state while ensuring timely activation of the main radio when needed, balancing power savings with network responsiveness.

The LP-WUS and low-power receiver (LR) feature may be applied to different use cases depending on capabilities of a UE and a network. In some cases, a UE may support LP-WUS monitoring but operate in a cell where a network does not support LP-WUS. In other cases, a UE may support LP-WUS monitoring but may not include a dedicated LR or may not support LP-WUS monitoring. These variations in UE and network capabilities may lead to different implementation approaches and design considerations for power-saving mechanisms.

This may complicate the scope and implementation of the feature (LP-WUS and LR) and may impact network operations if not carefully designed. From another perspective, it may also provide benefits to a communication system by enabling more diverse UE implementation solutions that enhance UE power savings without affecting network side and operations.

Building on this, it may be beneficial to consider a UE that does not have a dedicated LR. In such case, the UE could achieve low-power operation by leveraging regular receivers, such as the one used for RX/TX of NR. This may be done by enhancing power savings through for example operating the receiver using only one receive path (1Rx) or even reducing the performance of the 1Rx path to further minimize power consumption. By carefully considering this approach, such a UE may still be able to achieve a portion of the power savings, without the need for a dedicated LR.

When a UE does not have a dedicated LR for receiving a LP-WUS but instead uses a regular receiver in a reduced performance mode, the UE may not be able to benefit from the measurement relaxation envisioned by a network or a cell supporting LP-WUS/LP-SS features. As the UE may not be able to receive the LP-WUS or measure the LP-SS, the UE may need to follow measurement requirements, including receiving all paging occasions and performing corresponding measurements. This may reduce the potential power saving gains anticipated by the network through the support of LP-WUS and LP-SS, including those derived from possible measurement relaxation. Therefore, there is a need to enable the measurement relaxation benefits of the LP-WUS feature for a UE that does not support LP-WUS/LR without losing power saving gains due to paging occasion (PO) monitoring requirements.

In accordance with some example embodiments, there is provided solutions of reduced paging monitoring for low power operation. In some example embodiments, a network device transmits, to a user device, a message containing an indication that a user device incapable of the reception of the lower power signal is allowed to skip a paging occasion. The user device subsequently performs paging monitoring based on the indication.

In this way, a user device which may not have a low power receiver can still achieve reduced paging monitoring by skipping a subset of POs, reducing power consumption. This solution enables power saving without compromising paging reliability.

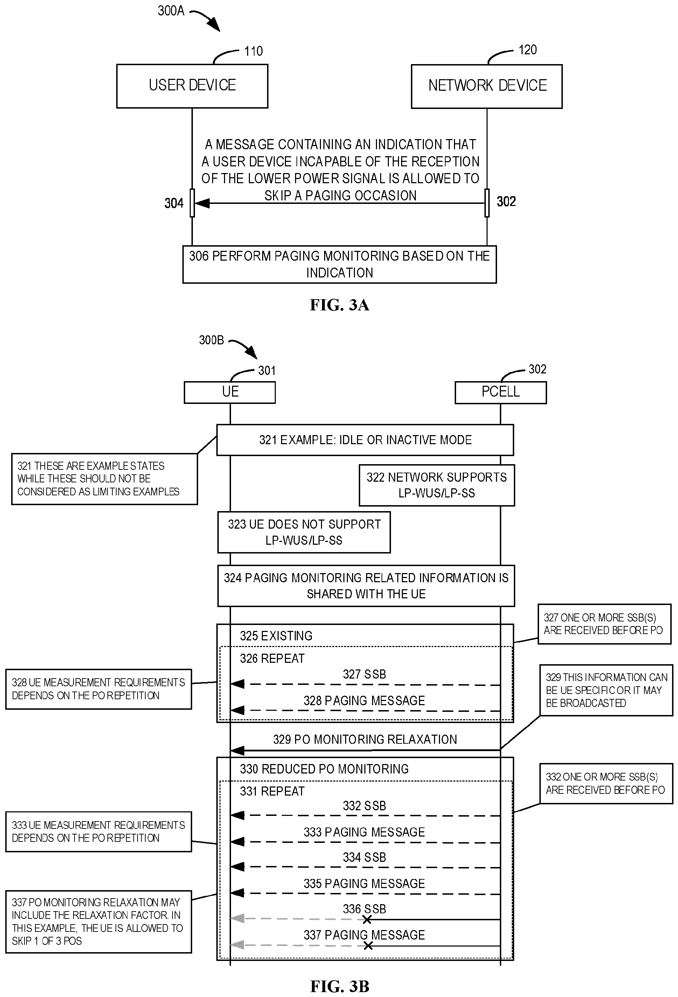

Reference is now made to FIG. 3A, which illustrates an example signaling flow 300A of a process of reduced paging monitoring according to some example embodiments. The signaling flow 300A involves the user device 110 and the network device 120.

As illustrated in FIG. 3A, the network device 120 transmits (302), to a user device 110, a message containing an indication that a user device, incapable of reception of a lower power signal, is allowed to skip a paging occasion (PO). Correspondingly, the user device 110 receives (304) this message.

In some examples, the network device 120 may support the transmission of lower power signals. In some example embodiments, the lower power signal may include at least one of a LP-WUS or a LP-SS. The LP-WUS may be used to pre-wake the user device 110 prior to a paging occasion, reducing unnecessary wake-ups. The LP-SS may be used to maintain time and frequency synchronization while the user device 110 is in a low power state. The LP-SS may also be used for performing measurements (referred to as LP measurements).

In some examples, the user device 110, incapable of reception of a lower power signal, may be a user device 110 which does not support transmission of LP-WUS or LP-SS. In some other examples, the user device 110 incapable of reception of a lower power signal may be a user device 110 without a low power receiver implemented.

The message indicating that the user device 110 is allowed to skip a PO may be transmitted in any appropriate way. In some example embodiments, the message may be a broadcasting or a dedicated message. For example, the message may be broadcast to all the user devices 110 in a cell via system information block (SIB) such as SIB1 or SIB2. For another example, the message may be transmitted from the network device 120 to the user device 110 via a dedicated message via for example radio resource control (RRC) signaling, such as an RRC reconfiguration message, enabling customized PO monitoring configuration for the specific user device 110 in the cell 102.

In some example embodiments, the message may include information about a lower power wake-up signal. For example, together with other LP-WUS information, the message may indicate to the user device 110 that the UE 110 is allowed to skip a PO and the UE 110 only needs to receive every xₜₕ PO(s). Any suitable information about the LP-WUS may be included in the message. The scope of the present disclosure will not be limited in this regard.

In addition to informing the user device 110 that skipping a PO is allowed, in some example embodiments, the network device 120 may transmit to the user device 110 at least one skipping rule for skipping the at least one PO. The network device 120 may transmit the at least one skipping rule in any proper way. In some example embodiments, the at least one skipping rule may be transmitted in the same message which is used for informing the user device 110 that skipping a PO is allowed. In some example embodiments, the skipping rule may be transmitted from the network device 120 to the user device 110 via a separate message. In some other example embodiments, the skipping rule may be predefined.

In some example embodiments, the skipping rule may indicate the user device 110 to monitor a subset (e.g., a first number) of POs among a larger sequence (e.g., a greater second number) of POs. In some other example embodiments, the skipping role may indicate to the user device 110 a first number of POs to be skipped among a greater second number of POs. Based on the skipping rule, the user device 110 may monitor or skip a subset of POs, thereby achieving power saving.

In some examples, the skipping rule may be defined in any appropriate way. For example, the skipping rule may be defined as: the user device 110 may monitor at least [floor(N/2) + 1] POs while the network device 120 may transmit paging messages N consecutive times, ensuring that at least one transmission overlaps with PO monitoring by the user device 110. For example, if the user device 110 is allowed to monitor 2 out of 3 POs, the network may repeat any paging message at least twice. In this case, the repetition of transmission may ensure successful reception of paging by user device 110.

In some example embodiments, the number of repetitions may be determined based on network configuration, UE capabilities, or service requirements. As an example, when the network device 120 allows such PO monitoring with skipping, the network device 120 may repeat any paging message targeted to user device 110, for example, at least three times.

After receiving (304) the message, the user device 110 performs (306) paging monitoring based on the indication. In some example embodiments, the paging monitoring may be performed based on at least one skipping rule for skipping the at least one PO. For example, if the user device 110 is informed to monitor 2 out of 3 POs, the user device 110 may skip the third PO after receiving 2 POs. In some example embodiments, the user device 110 may skip a PO and one or more signal measurement associated with the PO, based on the indication. In some examples, in addition to allow to skip PO reception, the user device 110 may also be allowed to skip one or more measurement related to the skipped PO. The one or more signal measurements may include SSB reception, synchronization measurements, channel quality measurements, or paging-related signal decoding, which are performed to maintain network synchronization and ensure accurate reception of paging messages.

An example process for paging monitoring for low power operation will be discussed below with reference to FIG. 3B which illustrates an example signaling flow 500A of an example paging monitoring process according to some example embodiments. In this example, the UE 301 is an example of the user device 110 and the primary cell (PCELL) 302 is an example of the cell 102.

As shown in FIG. 3B, the UE 301 may be (321) in idle mode or inactive mode. The idle mode or the inactive mode listed here are merely for the purpose of illustration but do not imply any limitation. The UE 301 may be required to monitor based on the configured PO monitoring parameters. The measurements performed by the UE 301 may depend on these parameters to optimize power consumption in idle mode. Hence, the UE 301 may only need to wake-up once for monitoring the PO and performing measurements. However, this method may also be applied in connected mode.

The PCELL 302 may support (322) the transmission of LP-WUS and LP-SS. The LP-WUS and LP-SS signals may be used for both synchronization and performing LP measurements (referred to as LP measurements). They may help the UE 301 stay in a low-power state while ensuring it can synchronize and monitor for paging occasions.

The UE 301 may not support (323) LP-WUS or LP-SS, or the UE 301 may not have a LR implemented. Thus the UE 301 may not benefit from these low-power features and will continue to rely on its regular PO monitoring process.

The UE 301 may receive (324) information related to PO monitoring from the PCELL 302. This information may be delivered from the PCELL 302 to the UE 301 either through broadcast messaging or dedicated signaling. The broadcast method may provide the same information to all UEs 301 in the cell, while dedicated signaling may be used to send personalized information to a specific UE 301.

The box 325 may illustrate the existing/legacy paging behavior of the UE 301, where the UE 301 may monitor all POs as per the existing requirements, without skipping any PO. The procedures included inside the box 526 may be repeated until, for example, the UE 301 successfully receives a paging message addressed to it.

For existing/legacy PO monitoring, the UE 301 may receive (327) at least one SSB. The one or more SSBs may be used by the UE 301 to perform the required measurements, such as synchronization with the network and signal quality assessment.

After receiving (327) the one or more SSBs, the UE 301 may receive (328) one or more paging messages. The one or more paging messages may or may not be addressed to the UE 301. If the paging message is not addressed to the UE 301, the UE 301 may repeat the reception of SSBs and paging messages.

The UE 301 may receive from the PCELL 302 information including an indication that the UE 501 is allowed to relax the PO monitoring. This information may be delivered to the UE 301 either through broadcast messaging or dedicated signaling. The message may include the specific PO monitoring skipping rules. For example, the UE 301 may be allowed to monitor only 2 out of 3 POs. When this PO skipping is allowed, it may also implicitly indicate that the UE 301 can skip measurements associated with the skipped PO accordingly.

The box 330 may illustrate the PO monitoring principles for low power operations, where the UE 301 may only monitor a subset of POs based on the PO skipping rule. The procedures included in the box 331 may be repeated until the UE 301 is paged by the network/PCELL 302.

The UE 301 may receive (332/334) at least one SSB in connection with PO monitoring. The UE 301 may receive (332/334) more than one SSB. These SSBs may be used by the UE 301 to perform the required synchronization and measurements.

After receiving the one or more SSBs, the UE 301 may receive (333/335) one or more paging messages. The one or more paging messages may or may not be addressed to the UE 301.

After receiving several sets of SSB and paging message, the UE 301 may skip (336) the SSB reception and the UE 301 may skip (337) the paging message, based on the allowed PO monitoring skipping rule. This may allow the UE 301 to conserve power by avoiding unnecessary wake-ups. The UE 301 may repeat the reception and skipping of the SSBs and the paging messages, until a paging message is address to the UE 301.

It is to be understood that the features and operations related to the user device 110 and the network device 120 as described above with reference to FIG. 3A are also applicable to the process in FIG. 3B and have similar effects. For the purpose of simplification, the details thereof will not be repeated.

In some example embodiments, the user device 110 may have more autonomies. The network device 120 transmits, to the user device 110 incapable of reception of a lower power signal, information that the lower power is supported. After receiving the information, the user device 110 enables skipping of at least one paging occasion. The user device 110 subsequently monitors based on the skipping of the at least one paging, a subset (e.g., a first number) of consecutive paging occasions among a larger sequence (e.g., a greater second number) of consecutive paging occasions. Meanwhile, the network device 120 repeats transmission of a paging message to the user device 110 over at least a third number of consecutive paging occasions among a second number of consecutive paging occasions and the third number is smaller than or equal to the second number.

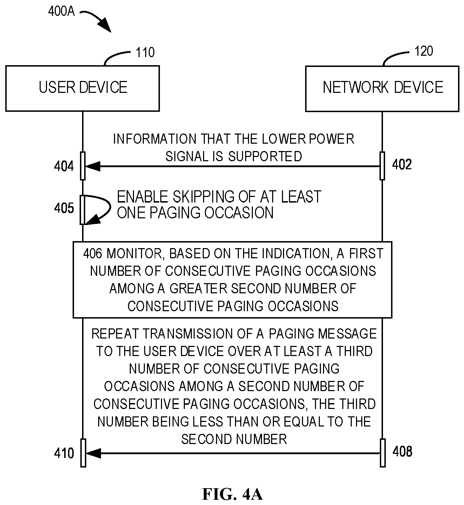

Reference is now made to FIG. 4A, which illustrates an example signaling flow 400A of a process of reduced paging monitoring according to some example embodiments. The signaling flow 400A involves the user device 110 and the network device 120.

As illustrated in FIG. 4A, the network device 120 transmits (402), to a user device 110 which may be incapable of reception of a lower power signal, information that the lower power signal is supported. Correspondingly, the user device 110 receives (404) the information from the network device 120.

In some example embodiments, the lower power signal may include at least one of a LP-WUS or a LP-SS. The LP-WUS may be used to pre-wake the user device 110 prior to a paging occasion, reducing unnecessary wake-ups. The LP-SS may be used to maintain time and frequency synchronization while the user device 110 is in a low power state. The LP-SS may also be used for performing measurements (referred to as LP measurements).

The information that the lower power signal is allowed may be received by the user device 110 in any appropriate way. In some example embodiments, the information may be received by the user device 110 via either a broadcasting or a dedicated message. For example, the information may be broadcast to all the user devices 110 in a cell via SIB such as SIB1 or SIB2. For another example, the information may be received by the user device 110 via a dedicated message via for example RRC signaling, such as an RRC reconfiguration message, enabling customized PO monitoring configuration for the specific user device 110 in the cell 102.

Responsive to receiving (404) the information, the user device 110 enables (405) skipping of at least one PO. In some examples, in addition to enabling skipping of at least one PO, the user device 110 may also determine at least one skipping rule. The skipping rule may be determined in any appropriate way and the skipping rule may be specified based on conditions including but not limited to UE capabilities or service requirements. For example, the skipping rule may specify the number of one or more POs to be monitored or skipped by the user device 110. The skipping rule may also specify the number of repeated transmission of a paging message required by the user device 110.

The user device 110 monitors (406) based on the skipping rule, a subset (e.g., a first number) of consecutive paging occasions among a larger sequence (e.g., a greater second number) of consecutive paging occasions. In some example embodiments, the user device may skip one or more signal measurements associated with a skipped PO.

In some example embodiments, to ensure that at least one transmission overlaps with PO monitoring by the user device 110, the user device 110 may require the paging message addressing to the user device 110 is repeated over N times (e.g., a third number of consecutive paging occasions) among larger sequence (e.g., a greater second number) of POs. Thus, the network device 120 repeats (408) the transmission of a paging message to the user device 110 over N times (e.g., a third number of consecutive paging occasions) among a larger sequence(e.g., a greater second number) of POs, the third number being less than or equal to the second number. In some example embodiments, the first number may be greater than or equal to a sum of one and a floor of the third number divided by two. Correspondingly, the user device 110 receives (410) the repeated transmission of paging messages.

For example, the skipping rule may be determined by the user device 110 as: the user device 110 may monitor at least [floor(N/2) + 1] POs while the network device 120 may be required to transmit paging messages N consecutive times, ensuring that at least one transmission overlaps with PO monitoring by the user device 110. For example, if the user device 110 monitor 2 out of 3 POs, the user device 110 may require the network device 120 to repeat any paging message at least twice. In this case, the repetition of transmission may ensure successful reception of paging by user device 110.

The user device 110 may continue the monitoring until the user device 110 receives a paging message addressed to itself. In some example embodiments, responsive to successful decoding of the paging message addressed to itself, the user device 110 may transmit to the network device 120 a reply to the paging message.

In some example embodiments, the network device 120 may determine whether a reply to the paging message transmitted over a first paging occasion of the second number of consecutive paging occasions is received from the user device 110. Responsive to absence of the reply, the network device 120 may retransmit the paging message to the user device 110 over a subsequent second paging occasion of the second number of consecutive paging occasions. In another case, the network device 120 may receive from the user device 110 a reply, the network device 120 may stop the transmission of the paging message.

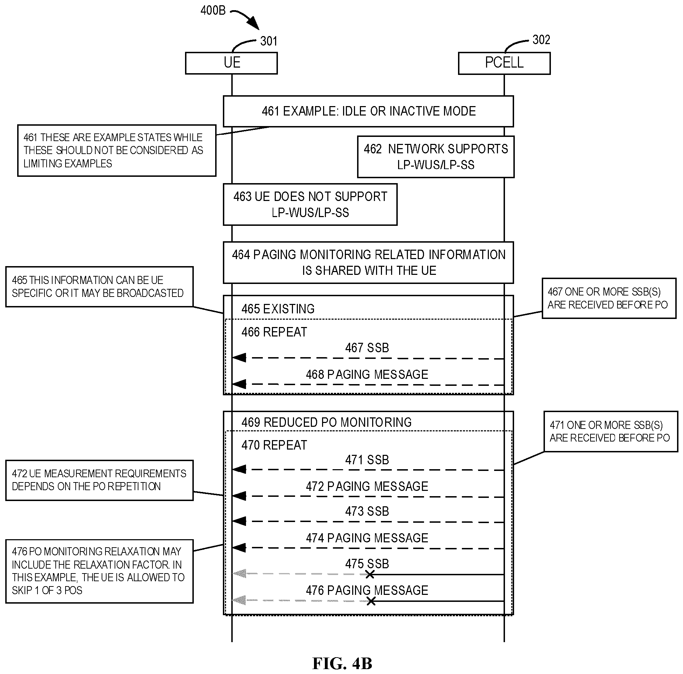

An example process for paging monitoring for low power operation will be discussed below with reference to FIG. 4B which illustrates an example signaling flow 400B of an example paging monitoring process according to some example embodiments.

As shown in FIG. 4B, the UE 301 may be (461) in idle mode or inactive mode. The idle mode or the inactive mode listed here are merely for the purpose of illustration but do not imply any limitation. The UE 301 may be required to monitor based on the configured PO monitoring parameters. The measurements performed by the UE 301 may depend on these parameters to optimize power consumption in idle mode. Hence, the UE 301 may only need to wake-up once for monitoring the PO and performing measurements. However, this method may also be applied in connected mode.

The PCELL 302 may support (462) the transmission of LP-WUS and LP-SS. The LP-WUS and LP-SS signals may be used for both synchronization and performing LP measurements (referred to as LP measurements). They may help the UE 301 stay in a low-power state while ensuring it can synchronize and monitor for paging occasions. The UE 301 may not support (463) LP-WUS or LP-SS, or the UE 301 may not have a LR implemented. Thus, the UE 301 may not benefit from these low-power features and will continue to rely on its regular PO monitoring process.

The UE 301 may receive (464) information related to PO monitoring from the PCELL 302. This information may be delivered from the PCELL 302 to the UE 301 either through broadcast messaging or dedicated signaling. The broadcast method may provide the same information to all UEs 301 in the cell, while dedicated signaling may be used to send personalized information to a specific UE 301.

The box 465 may illustrate the existing/legacy paging behavior of the UE 301, where the UE 301 may monitor all POs as per the existing requirements, without skipping any PO. The procedures included inside the box 466 may be repeated until, for example, the UE 301 successfully receives a paging message addressed to it. For existing/legacy PO monitoring, the UE 301 may receive (467) at least one SSB. The one or more SSBs may be used by the UE 301 to perform the required measurements, such as synchronization with the network and signal quality assessment.

After receiving (467) the one or more SSBs, the UE 301 may receive (328) one or more paging messages. The one or more paging messages may or may not be addressed to the UE 301. If the paging message is not addressed to the UE 301, the UE 301 may repeat the reception of SSBs and paging messages.

The PCELL 302 may transmit (469) to the UE 301 information that the lower power signal is supported. This information may be delivered to the UE 301 either through broadcast messaging or dedicated signaling. After receiving the information, the UE 301 may subsequently enable skipping of at least one PO. In addition, the UE 301 may determine a skipping rule. For example, the UE 301 may determine to monitor only 2 out of 3 POs.

The box 470 may illustrate the reduced PO monitoring principles for low power operations, where the UE 301 may only monitor a subset of POs based on the PO skipping rule. The procedures included in the box 469 may be repeated until the UE 301 is paged by the network/PCELL 302.

The UE 301 may receive (471/473) at least one SSB in connection with PO monitoring. The UE 301 may receive (471/473) more than one SSB. These SSBs may be used by the UE 301 to perform the required synchronization and measurements. After receiving the one or more SSBs, the UE 301 may receive (472/474). The one or more paging messages may or may not be addressed to the UE 301.

After receiving several sets of SSB and paging message, the UE 301 may skip (475) the SSB reception and the UE 301 may skip (476) the paging message, based on the determined PO monitoring skipping indication. This may allow the UE 301 to conserve power by avoiding unnecessary wake-ups.

At step 577, based on the allowed PO monitoring skipping, the UE 301 may not need to monitor the third paging message occasion. The UE 301 may repeat the reception and skipping of the SSBs and the paging messages, until a paging message is address to the UE 301.

It is to be understood that the features and operations related to the user device 110 and the network device 120 as described above with reference to FIG. 4A are also applicable to the process in FIG. 4B and have similar effects. For the purpose of simplification, the details thereof will not be repeated.

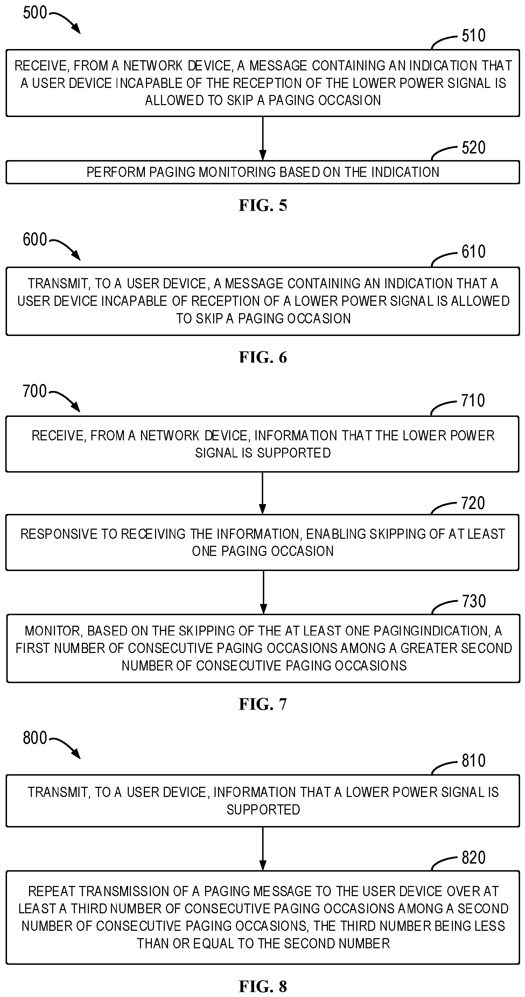

FIG. 5 shows a flowchart of an example method 500 implemented at a user device in accordance with some example embodiments of the present disclosure. For the purpose of discussion, the method 500 will be described from the perspective of the user device 110 in FIG. 1.

At block 510, the user device 110 receives, from a network device, a message containing an indication that a user device incapable of the reception of the lower power signal is allowed to skip a paging occasion.

At block 520, the user device 110 performs paging monitoring based on the indication.

In some example embodiments, the message may be a broadcasting or dedicated message.

In some example embodiments, the message may further contain information about a lower power wake up signal.

In some example embodiments, the paging monitoring may be performed further based on at least one skipping rule for skipping the at least one paging occasion, and the at least one skipping rule may be contained in the message, or configured by the network device in a separate message, or predefined.

In some example embodiments, the at least one skipping rule may indicate a first number of paging occasions to be monitored among a greater second number of paging occasions.

In some example embodiments, the at least one skipping rule may indicate a first number of paging occasions to be skipped among a greater second number of paging occasions.

In some example embodiments, the user device 110 may skip a paging occasion and one or more signal measurement associated with the paging occasion, based on the indication.

In some example embodiments, the lower power signal may comprise at least one of a lower power wake up signal or a lower power synchronization signal.

In some example embodiments, a user device capable of performing any of the method 500 (for example, the user device 110 in FIG. 1) may comprise means for performing the respective operations of the method 500 and any of the embodiments thereof. The means may be implemented in any suitable form. For example, the means may be implemented in a circuitry or software module. The user device may be implemented as or included in the user device 110 in FIG. 1.

FIG. 6 shows a flowchart of an example method 600 implemented at a network device in accordance with some example embodiments of the present disclosure. For the purpose of discussion, the method 600 will be described from the perspective of the network device 120 in FIG. 1.

At block 610, the network device 120 transmits, to a user device, a message containing an indication that a user device incapable of reception of a lower power signal is allowed to skip a paging occasion.

In some example embodiments, the message may be a broadcasting or dedicated message.

In some example embodiments, the message may further contain information about a lower power wake up signal.

In some example embodiments, the network device 120 may transmit, to the user device, at least one skipping rule for skipping the at least one paging occasion.

In some example embodiments, the at least one skipping rule may be contained in the message.

In some example embodiments, the at least one skipping rule may indicate a first number of paging occasions to be monitored among a greater second number of paging occasions.

In some example embodiments, the at least one skipping rule may indicate a first number of paging occasions to be skipped among a greater second number of paging occasions.

In some example embodiments, the network device 120 repeats transmission of a paging message to the user device over a plurality of consecutive paging occasions.

In some example embodiments, the lower power signal may comprise at least one of a lower power wake up signal or a lower power synchronization signal.

In some example embodiments, a network device capable of performing any of the method 600 (for example, the network device 120 in FIG. 1) may comprise means for performing the respective operations of the method 600 and any of the embodiments thereof. The means may be implemented in any suitable form. For example, the means may be implemented in a circuitry or software module. The network device may be implemented as or included in the network device 120 in FIG. 1.

FIG. 7 shows a flowchart of an example method 700 implemented at a user device in accordance with some example embodiments of the present disclosure. For the purpose of discussion, the method 700 will be described from the perspective of the user device 110 in FIG. 1.

At block 710, the user device 110 receives, from a network device, information that the lower power signal is supported.

At block 720, responsive to receiving the information, the user device 110 enables skipping of at least one paging occasion.

At block 730, the user device 110 monitors, based on the skipping of the at least one paging, a first number of consecutive paging occasions among a greater second number of consecutive paging occasions.

In some example embodiments, the user device 110 may skip one or more signal measurements associated with a skipped paging occasion among the second number of consecutive paging occasions.

In some example embodiments, a paging message addressed to the user device may be repeated over at least a third number of consecutive paging occasions among the second number of consecutive paging occasions, the third number being less than or equal to the second number.

In some example embodiments, the first number may be greater than or equal to a sum of one and a floor of the third number divided by two.

In some example embodiments, responsive to successful decoding of the paging message, the user device 110 may transmit, to the network device, a reply to the paging message.

In some example embodiments, the information may be received via a broadcasting or dedicated message.

In some example embodiments, the lower power signal may comprise at least one of a lower power wake up signal or a lower power synchronization signal.

In some example embodiments, a user device capable of performing any of the method 700 (for example, the user device 110 in FIG. 1) may comprise means for performing the respective operations of the method 700 and any of the embodiments thereof. The means may be implemented in any suitable form. For example, the means may be implemented in a circuitry or software module. The user device may be implemented as or included in the user device 110 in FIG. 1.

FIG. 8 shows a flowchart of an example method 800 implemented at a network device in accordance with some example embodiments of the present disclosure. For the purpose of discussion, the method 800 will be described from the perspective of the network device 120 in FIG. 1.

At block 810, the network device 120 transmits, to a user device, information that a lower power signal is supported.

At block 820, the network device 120 repeats transmission of a paging message to the user device over at least a third number of consecutive paging occasions among a second number of consecutive paging occasions, the third number being less than or equal to the second number.

In some example embodiments, the network device 120 may determine whether a reply to the paging message transmitted over a first paging occasion of the second number of consecutive paging occasions is received from the user device; and responsive to absence of the reply, the network device 120 may retransmit the paging message to the user device over a subsequent second paging occasion of the second number of consecutive paging occasions.

In some example embodiments, responsive to reception of the reply, the network device 120 may stop the transmission of the paging message.

In some example embodiments, the information may be transmitted via a broadcasting or dedicated message.

In some example embodiments, the lower power signal may comprise at least one of a lower power wake up signal or a lower power synchronization signal.

In some example embodiments, a network device capable of performing any of the method 800 (for example, the network device 120 in FIG. 1) may comprise means for performing the respective operations of the method 800 and any of the embodiments thereof. The means may be implemented in any suitable form. For example, the means may be implemented in a circuitry or software module. The network device may be implemented as or included in the network device 120 in FIG. 1.

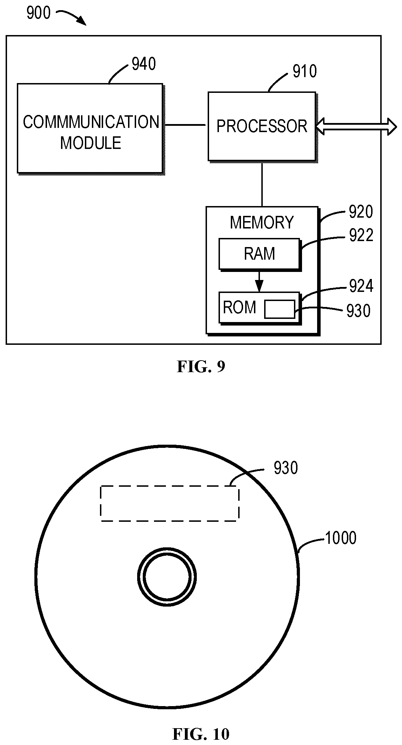

FIG. 9 is a simplified block diagram of a device 900 that is suitable for implementing example embodiments of the present disclosure. The device 900 may be provided to implement a communication device, for example, the terminal device 110 or the network device 120 as shown in FIG. 1. As shown, the device 900 includes one or more processors 910, one or more memories 920 coupled to the processor 910, and one or more communication modules 940 coupled to the processor 910.

The communication module 940 is for bidirectional communications. The communication module 940 has one or more communication interfaces to facilitate communication with one or more other modules or devices. The communication interfaces may represent any interface that is necessary for communication with other network elements. In some example embodiments, the communication module 940 may include at least one antenna.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 922 and other volatile memories that will not last in the power-down duration.

A computer program 930 includes computer executable instructions that are executed by the associated processor 910. The instructions of the program 930 may include instructions for performing operations/acts of some example embodiments of the present disclosure. The program 930 may be stored in the memory, e.g., the ROM 924. The processor 910 may perform any suitable actions and processing by loading the program 930 into the RAM 922.

The example embodiments of the present disclosure may be implemented by means of the program 930 so that the device 900 may perform any process of the disclosure as discussed with reference to FIG. 1 to FIG. 8. The example embodiments of the present disclosure may also be implemented by hardware or by a combination of software and hardware.

In some example embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 10 shows an example of the computer readable medium 1000 which may be in form of CD, DVD or other optical storage disk. The computer readable medium 1000 has the program 930 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A user device comprising:
at least one processor; and
at least one memory storing instructions that, when executed by the at least one processor, cause the user device incapable of reception of a lower power signal at least to:
receive, from a network device, information that the lower power signal is supported;
responsive to receiving the information, enabling skipping of at least one paging occasion; and
monitor, based on the skipping of the at least one paging, a first number of consecutive paging occasions among a greater second number of consecutive paging occasions.

2. The user device of claim 1, wherein the user device is further caused to:
skip one or more signal measurements associated with a skipped paging occasion among the second number of consecutive paging occasions.

3. The user device of any of claims 1 to 2, wherein a paging message addressed to the user device is repeated over at least a third number of consecutive paging occasions among the second number of consecutive paging occasions, the third number being less than or equal to the second number.

4. The user device of claim 3, wherein the first number is greater than or equal to a sum of one and a floor of the third number divided by two.

5. The user device of claim 3 or 4, wherein the user device is further caused to:
responsive to successful decoding of the paging message, transmit, to the network device, a reply to the paging message.

6. The user device of any of claims 1 to 5, wherein the information is received via a broadcasting or dedicated message.

7. The user device of any of claims 1 to 6, wherein the lower power signal comprises at least one of a lower power wake up signal or a lower power synchronization signal.

8. A network device comprising:
at least one processor; and
at least one memory storing instructions that, when executed by the at least one processor, cause the network device at least to:
transmit, to a user device, information that a lower power signal is supported; and
repeat transmission of a paging message to the user device over at least a third number of consecutive paging occasions among a second number of consecutive paging occasions, the third number being less than or equal to the second number.

9. The network device of claim 8, wherein the network device caused to repeat the transmission of the paging message is caused to:
determine whether a reply to the paging message transmitted over a first paging occasion of the second number of consecutive paging occasions is received from the user device; and
responsive to absence of the reply, retransmit the paging message to the user device over a subsequent second paging occasion of the second number of consecutive paging occasions.

10. The network device of claim 9, wherein the network device is further caused to:
responsive to reception of the reply, stop the transmission of the paging message.

11. A method comprising:
receiving, from a network device, information that the lower power signal is supported;
responsive to receiving the information, enabling skipping of at least one paging occasion; and
monitoring, based on the skipping of the at least one paging, a first number of consecutive paging occasions among a greater second number of consecutive paging occasions.

12. A method comprising:
transmitting, to a user device, information that a lower power signal is supported; and
repeating transmission of a paging message to the user device over at least a third number of consecutive paging occasions among a second number of consecutive paging occasions, the third number being less than or equal to the second number.

13. A user device comprising:
means for receiving, from a network device, information that the lower power signal is supported;
responsive to receiving the information, means for enabling skipping of at least one paging occasion; and
means for monitoring, based on the skipping of the at least one paging, a first number of consecutive paging occasions among a greater second number of consecutive paging occasions.

14. A network device comprising:
means for transmitting, to a user device, information that a lower power signal is supported; and
means for repeating transmission of a paging message to the user device over at least a third number of consecutive paging occasions among a second number of consecutive paging occasions, the third number being less than or equal to the second number.

15. A computer readable medium comprising instructions stored thereon for causing an apparatus at least to perform the method of claim 11 or the method of claim 12.
